# EUROPEAN PATENT APPLICATION

(11) **EP 1 326 410 A1**
(43) Date of publication of application: **09.07.2003**
(21) Application number: 02447004.9
(22) Date of filing: 08.01.2002
(51) Int. Cl.: H04M 1/60

(54) **Handsfree wireless communication system for handsfree communication between a user and a mobile phone**

(71) Applicant: CCM Europe, 9160 Lokeren (BE)
(72) Inventor: Benyahia, Karim, Miami, FL 33178-4536 (US)
(74) Representative: Luys, Marie-José A.H.

(57) **Abstract**

Handsfree wireless communication system comprising a headset (1) with a first transceiver, a first rechargeable battery and a first electrical interface (6) for enabling recharging of the first rechargeable battery; and a base (11) comprising means (35; 85) for storing the headset and a second electrical interface (36; 86) for contacting the first electrical interface and providing recharging current to the first rechargable battery of the headset, the base (11) being a combination of a stationary part (21) and a portable part (31), the portable part (21) comprising means (22) for holding the mobile phone, a phone interface (25), a second transceiver (23) and means (24) for providing electrical power to the second transceiver, the portable part further comprising a third electrical interface (26) for contacting a fourth electrical interface (34; 84) on the stationary part, the third electrical interface being connected to the phone interface for conducting recharging current to a second rechargable battery which is included in the mobile phone, the stationary part (31; 81) comprising a power interface (32; 82) and recharging means for providing recharging current to the second and fourth electrical interfaces.

## Description

The present invention relates to a handsfree wireless communication system for handsfree communication between a user and a mobile phone according to the preamble of the first claim.

A handsfree wireless communication system for handsfree communication between a user and a mobile phone is for example known from US-A-6,078,825, which describes several embodiments of handsfree wireless communication systems.

A first embodiment of the handsfree wireless communication system described in US-A-6,078,825 comprises a headset for mounting on the user's head and a base station for holding the user's mobile phone. The base station has a clip for attaching the base station to the user's clothing. The headset and the base station each have a transceiver for wirelessly communicating with each other. The transceivers are powered by rechargeable batteries. This first embodiment is suitable for providing handsfree mobile communication to a user while he is walking, cycling, etc., but is less or not suitable for use while driving a vehicle.

A second embodiment of the handsfree wireless communication system described in US-A-6,078,825 comprises a headset, similar to that of the first embodiment, and a base station comprising a transceiver for wirelessly communicating with that of the headset. The base station has a power interface for connecting the base station to an external power source, for example the cigarette lighter socket in a vehicle. This second embodiment further comprises a separate holder for the mobile phone and a base plate attachable to the dashboard of the vehicle. The base station and the holder are attached to the base plate. The connection between the mobile phone and the base station is achieved by means of a cable. This second embodiment is suitable for providing handsfree mobile communication to a user while driving a vehicle, but is less or not suitable for use while walking, cycling, etc.

It is clear from US-A-6,078,825 that the first and second embodiments described above are each adapted for a particular use and comprise different devices for each use. The first embodiment is more suitable when the user wants to have handsfree mobile communication in an environment where no external power source is present, for example when walking, cycling, etc., whereas the second embodiment is more suitable for use in an environment where an external power source is present, for example as a handsfree car-kit.

There is thus a need for a single handsfree wireless communication system adapted for use in different environments. It is an aim of the invention to provide such a handsfree wireless communication system.

This aim is achieved according to the invention with a handsfree wireless communication system showing the technical characteristics of the characterising part of the first claim.

The system of the invention comprises a headset and a base. The base is a combination of a stationary part, which is provided to remain connected to the external power source, and a portable part which the user can take with him when walking, cycling, etc., leaving the stationary part behind.

The headset is provided for mounting on the user's head. It comprises a first transceiver which is electronically connected to a speaker and a microphone. For providing electrical power to the first transceiver, the headset comprises a first rechargeable battery. Recharging of the first rechargeable battery is enabled by a first electrical interface on the headset.

The base comprises means for storing the headset and a second electrical interface for contacting the first electrical interface on the headset. In this way, recharging current can be supplied from the base towards the rechargeable battery of the headset. The means for storing the headset and the second electrical interface are mounted on the stationary part or on the portable part of the base.

The portable part of the base comprises means for holding the mobile phone, a second transceiver for wirelessly communicating with the first transceiver and means for providing electrical power to the second transceiver. The second transceiver is electronically connectable to the mobile phone for communication by means of a phone interface, which is provided on the portable part of the base. The portable part further comprises a third electrical interface for contacting a fourth electrical interface on the stationary part. This third electrical interface is connected to the phone interface, so that recharging current can be supplied from the stationary part through the portable part to the rechargeable battery of the mobile phone.

The stationary part of the base comprises a power interface for connecting the base to the external source of electrical power and recharging means for providing recharging current to the second and fourth electrical interfaces. In use, these recharging means draw electrical power from the external power source and supply it in the form of recharging current towards the rechargeable batteries of the headset and the mobile phone.

In the system of the invention, the second transceiver is mounted on a removable part of the base, namely the portable part. By this removability of the second transceiver, the system of the invention is suitable for use in environments with and without external power source. For use in an environment with external power source, the user places his phone on the portable part of the base, which is then mounted on the stationary part, which in turn provides a connection with the external power source. For use in an environment without external power source, the user simply removes and takes along the portable part of the base, with his phone held in this portable part.

As the base, i.e. either the stationary or the portable part, is provided with the electrical interface for conducting recharging current to the rechargeable battery of the headset, this battery can be recharged while the system is not in use and the headset is stored on the base. This obviates the need of providing a cable for connecting the battery of the headset to a power source for recharging. Furthermore, also the need of providing a series of interchangeable rechargeable batteries for the headset can be obviated, as the battery of the headset can be recharged on the base in between calls. As a result, the cost of the system can be reduced. Furthermore, by the storability of the headset on the base, it can be prevented that the headset gets lost when not in use.

From the above, it follows that the system of the invention is very suitable for use in different environments, so that the user does not have to purchase different systems for different environments. Furthermore, by splitting up the base into the portable part and the stationary part, it can be achieved that the stationary part can be constructed as a universal part of the base, suitable for different types of mobile phones, and that only the portable part needs to be adapted to the type of the user's mobile phone. This also has the advantage that, when the user buys himself a new mobile phone of a different type, he does not need to buy a whole new handsfree system adapted to the new mobile phone, but only a new portable part.

In a first embodiment of the system of the invention, the means for providing electrical power to the transceiver of the portable part comprise a third rechargeable battery, which is included in the portable part. This third rechargeable battery is connected to the third electrical interface of the portable part. In this way, the third rechargeable battery can be recharged while the portable part is stored on the stationary part.

In a second embodiment of the system of the invention, the means for providing electrical power to the transceiver of the portable part comprise a fifth electrical interface, to which the transceiver is connected and which is provided for contacting a battery-out interface of the mobile phone. In this embodiment, the transceiver of the portable part is powered by the battery of the mobile phone. In this way, the need for providing a separate rechargeable battery on the portable part is obviated, which can reduce the weight of the portable part.

The means for storing the headset and the second electrical interface for contacting the first electrical interface of the headset can be mounted on the stationary part as well as on the portable part. When mounted on the portable part, the second electrical interface is connected to the third electrical interface of the portable part, so that recharging current can be conducted from the stationary part through the portable part to the rechargeable battery of the headset.

The base of the system of the invention preferably comprises means for producing sound, such as for example a speaker or a connector to which a speaker is connectable or other means, and means for receiving sound, such as for example a microphone or a connector to which a microphone is connectable or other means. In addition, the base preferably comprises means for selecting between communication via the sound receiving and producing means on the base and via the speaker and microphone on the headset. In this way, the user is provided with the possibility to select handsfree communication using the headset and handsfree communication using the sound means on the base. This adds to the flexibility of the system of the invention and can ensure handsfree communication in the event that the battery of the headset is empty and needs recharging in the base.

The selection means mentioned above are preferably operated by detecting means for detecting storage of the headset on the base. These detecting means are provided to detect when the headset is stored on the base, i.e. the stationary part or the portable part, and accordingly operate the selecting means to enable handsfree communication using the sound producing and receiving means on the stationary part. When the headset is removed from the storage means on the base, the detecting means operate the selecting means to enable handsfree communication using the speaker and the microphone provided on the headset.

Preferably, the system further comprises a cigarette lighter adapter which is insertable in a cigarette lighter socket of a vehicle and is removably connectable to the power interface on the stationary part of the base. By the removability of the adapter, the user can choose the location for mounting the stationary part in the vehicle. The stationary part can be mounted directly above the cigarette lighter socket, in which case the stationary part is mounted directly on the adapter, or the stationary part can be mounted on a different location in the vehicle (for example when the lighter socket is unsuitably positioned), in which case the stationary part and the adapter are connected by means of a power cable.

Preferably, the power interface of the stationary part is constructed as a means for attaching the stationary part to a base plate which is mounted on the dashboard of the vehicle. In this way, when the cigarette lighter adapter is removed from the power interface, the latter can serve for attaching the stationary part of the base. In this embodiment, the stationary part comprises a dc jack for connecting a power cable, which connects the stationary part to the adapter.

The system of the invention may further comprise a table-top device for making the system suitable for use as a desktop handsfree system. The table-top device comprises an ac/dc converter, an ac mains plug for connection to an ac mains net and a socket corresponding to a cigarette lighter socket in a vehicle. In this way, the user can simply plug the stationary part of the base into the table-top device by means of the cigarette lighter adapter. The ac/dc converter converts ac mains current to dc recharging current.

The invention will be further elucidated by means of the following description and the appended figures.

Figure 1 shows an embodiment of the headset of the system according to the invention.

Figure 2 shows a front view of a first embodiment of the base of the system according to the invention.

Figure 3 shows a side view of the first embodiment of the base shown in figure 2.

Figures 4a and 4b respectively show front and side views of a second embodiment of the base of the system according to the invention, with the headset stored on the stationary part of the base.

Figures 5-8 show accessories of the system according to the invention for connecting the stationary part to a cigarette lighter socket in a vehicle.

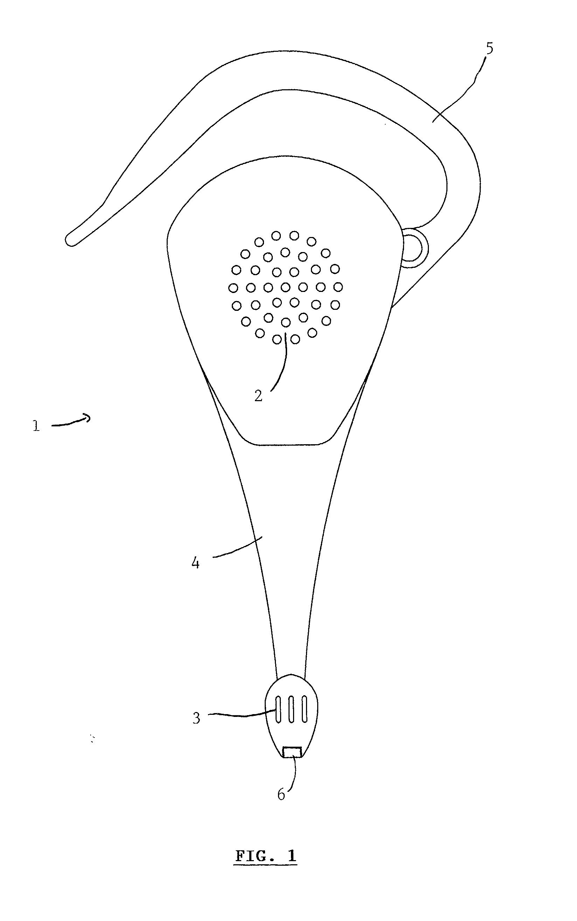

The headset 1 shown in figure 1 comprises a body 4, on which a speaker 2 and a microphone 3 are mounted, and an ear-clip 5 which is rotatably mounted on the body 4 opposite the speaker 2. By this rotatable mounting, the user can rotate the body with respect to the ear-clip to direct the microphone towards his mouth and to use the headset 1 on either ear.

In its interior, the headset 1 comprises a first transceiver and a first rechargeable battery for providing electrical power to the first transceiver. These components are well known in the art and are therefore not shown, nor will they be described here in further detail. The first transceiver is electronically connected to the speaker 2 and the microphone 3. The headset further comprises a first electrical interface 6, to which the first rechargeable battery is connected, for enabling recharging of the first rechargeable battery.

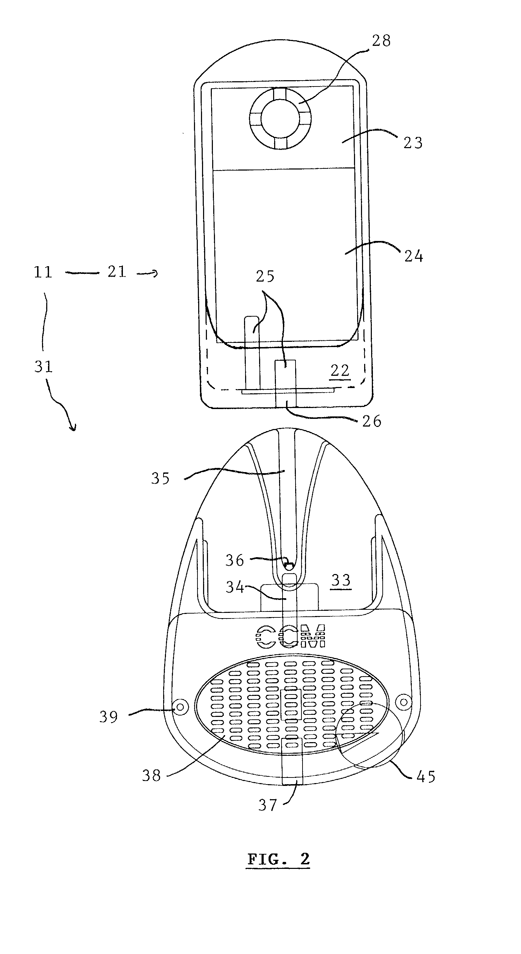

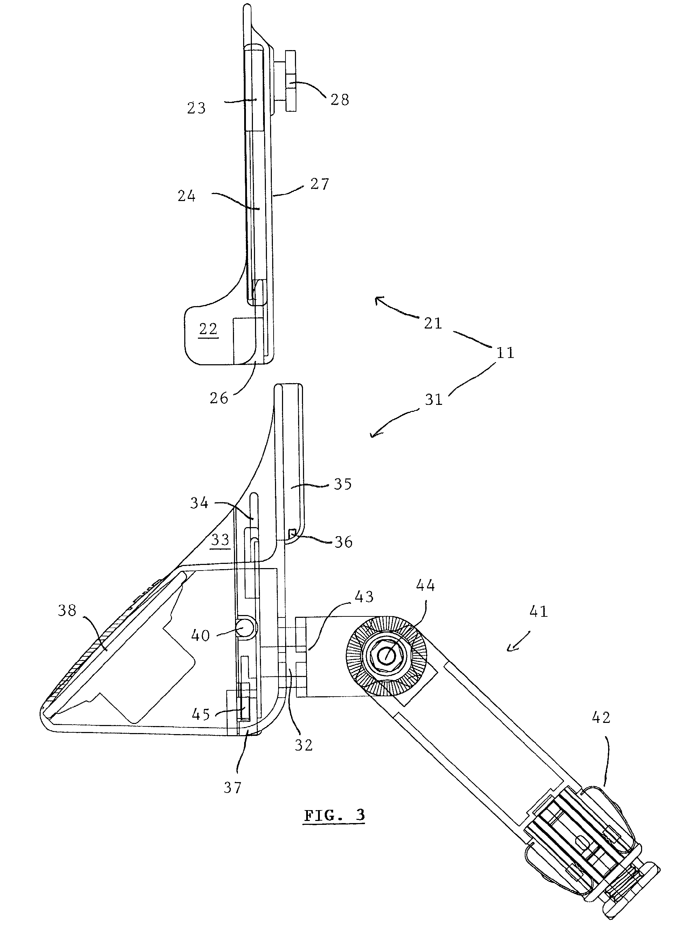

The first embodiment of the base 11, shown in figures 2 and 3, comprises a stationary part 31 and a portable part 21.

The portable part 21 of the base 11 is provided for holding the mobile phone (not shown) in that it comprises a slot 22 having an interior shape corresponding to the exterior shape of the mobile phone. The portable part 21 comprises a second transceiver 23 for wirelessly communicating with the first transceiver (not shown) of the headset. Electrical power is supplied to the second transceiver by a rechargeable battery 24, which is included in the portable part. The second transceiver 23 is electronically connectable to the mobile phone for communication by means of a phone interface 25. The portable part 21 further comprises a third electrical interface 26 for contacting a fourth electrical interface 27 on the stationary part 21. This third electrical interface 26 is connected to the phone interface 25, so that recharging current can be supplied from the stationary part 31 through the portable part 21 to the rechargeable battery of the mobile phone. On its back wall 27, the portable part 21 comprises a connector 28, on which a means for attaching the portable part 21 in the vicinity of the user can be mounted, such as for example a belt clip (not shown) or other means.

The stationary part 31 of the base 11 has a slot 33 for receiving and holding the portable part 21. In this slot 33, the fourth electrical interface 34 is mounted for contacting the third electrical 26 interface of the portable part 21. The stationary part 31 also has a socket 35 for receiving and holding the headset 1. In this socket 35, a second electrical interface 36 is provided for contacting the first electrical interface 6 of the headset 1, so that recharging current can be supplied from the stationary part 31 to the rechargeable battery of the headset 1.

The stationary part 31 further comprises a power interface 32 for connecting the base 11 to an external source of electrical power. As shown in figure 3, a cigarette lighter adapter 41 is mounted on the power interface 32. Recharging means (not shown) are mounted in the interior of the stationary part 31 for providing recharging current to the second and fourth electrical interfaces 36, 34 and towards the rechargeable batteries of the headset 1 and the mobile phone (not shown). In use, these recharging means draw electrical power from the external power source and supply it in the form of recharging current towards the rechargeable batteries of the headset and the mobile phone.

The stationary part 31 shown in figures 2 and 3 further comprises a speaker 38 and one or two microphones 39. Selecting means (not shown) are provided on the stationary part for selecting between handsfree communication using the headset and using the speaker 38 and microphone(s) 39 on the stationary part 31. In the latter case, the speaker 38 and microphone(s) 39 are electronically connected to the mobile phone for communication via the third and fourth electrical interfaces 26, 34 and the phone interface 25. Preferably the selecting means are operated by detection means (not shown) which are provided in the socket 35 for holding the headset and which can detect storage of the headset 1 in the socket 35. These detection means may for example comprise a contact spring or any other detection means known to the person skilled in the art. The stationary part 31 is preferably further provided with a volume control 45, which is operable by the user and is provided to control the volume of the speaker 38, and a microphone jack 40 for connecting an additional microphone (not shown).

The cigarette lighter adapter 41 is removably connected on the power interface 32 of the stationary part 31. This power interface 32 is constructed such that it can also serve as a mechanical connector for attaching the stationary part 31 of the base 11 to a base plate (not shown), which is in turn attached on for example the dashboard of a vehicle (not shown). Power is then supplied to the stationary part 31 by means of a power cable (not shown), of which one end is inserted into a dc jack 37 on the bottom of the stationary part 31 and the other end is connected on the cigarette lighter adapter 41.

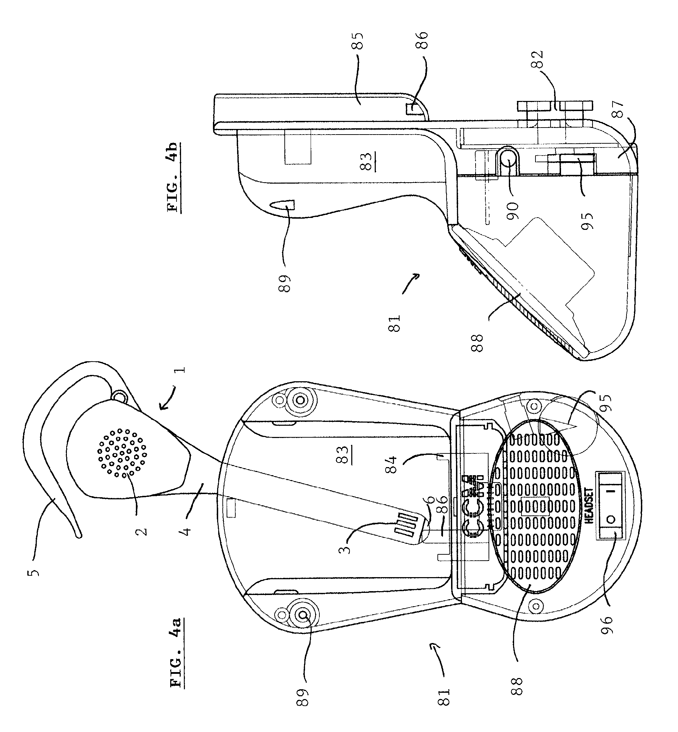

The second embodiment of the system of the invention, shown in figures 4a-b, largely corresponds to the first embodiment of figures 2 and 3. The portable part of the second embodiment corresponds to that of the first embodiment and is therefore neither shown in figures 4a-b, nor will it be further described here. The stationary part 81 of figures 4a-b The stationary part 81 likewise comprises a power interface 82, a slot 83 for receiving and holding the portable part 21, a fourth electrical interface 84 for contacting the third electrical interface 26 of the portable part 21, a socket 85 for storing the headset 1, a second electrical interface 86 for contacting the first electrical interface 6 of the headset 1, a dc jack 87, a speaker 38, one or two microphones 89, a microphone jack 90 and a volume control 95. The stationary part 81 is shown with the headset 1 stored in the socket 85.

The stationary part 81 of the second embodiment of the system differs from that of the first embodiment of the system shown in figures 2 and 3 in that a manual selection button 96 is provided, by means of which the user can manually select between handsfree communication using the headset 1 and using the speaker 88 and microphone 89 on the stationary part 81.

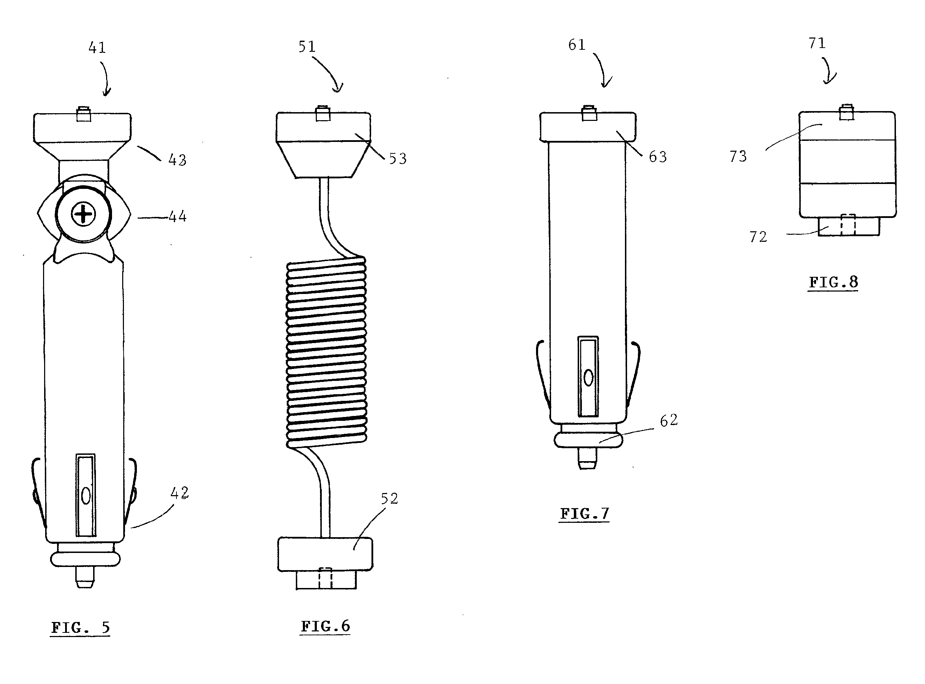

Figures 5-8 show a number of possible accessories which may be utilised with the system according to the invention for connecting the stationary part 31; 81 to a cigarette lighter socket in a vehicle.

Figure 5 shows the cigarette lighter adapter 41 which is also shown connected on the power interface 32 of the stationary part 31 in figure 3. The adapter 41 comprises a plug 42 on one end for inserting into the cigarette lighter socket in the vehicle (not shown). On the opposite end, the adapter 41 comprises a female connector 43 for connecting on the power interface 32; 82 of the stationary part 31; 81. In between, the adapter 41 comprises a hinge 44, by means of which the user can select the correct angle in which the stationary part 31; 81 is to be mounted, when it is directly connected on the adapter 41 (see figure 3).

Figure 6 shows a power cable 51 connectable between the stationary part 31; 81 and the cigarette lighter adapter 41. The cable 51 comprises a male connector 52 having a shape corresponding to that of the power interface 32; 82 and a female connector 53 having a shape corresponding to that of the female connector 43 of the adapter 41. Alternatively, the female connector 53 may also have a shape (not shown) suitable for insertion into the dc jack 37; 87, so that the power interface 32; 82 of the stationary part 31; 81 is left free for use as mechanical connector for attachment on a base plate (not shown), which is in turn attached on the dashboard of the vehicle.

Figure 7 shows another cigarette lighter adapter 61, which differs from that of figure 5 in that the hinge 44 is left out, leading to a shorter length of the adapter 61. The adapter 61 comprises a plug 62 and a female connector 63 corresponding to those of the adapter of figure 5. This adapter 61 is more suitable for use in conjunction with the power cable 51.

Figure 8 shows an extension piece 71 connectable between the stationary part 31; 81 and the cigarette lighter adapter 41. The extension piece comprises a male connector 72 corresponding to the power interface 32; 82 and a female connector 73 corresponding to that of the adapter 41. By means of the extension piece 71, the user can increase the distance between the stationary part 31; 81 and the cigarette lighter socket of the vehicle if necessary.

It is clear that the system of the invention can be expanded with other accessories than those shown in figures 5-8. For example, a table-top device (not shown) may be provided for using the system as desktop handsfree system. Such a table-top device may for example comprise an ac/dc converter having an ac mains plug for connecting to an ac mains net and a socket corresponding to a cigarette lighter socket in a vehicle. The user can then simply plug the stationary part 31; 32 into the table-top device by means of the adapter 41.

In the embodiments shown in the figures 2-4, the socket 35; 85 for storing the headset 1 is provided on the stationary part 31; 81. Alternatively, the socket 35; 85 may also be provided on the portable part 21, in which case the second electrical interface 36; 86 is electrically connected to the third electrical interface 26, so that recharging current can be conducted from the stationary part 31; 81 through the portable part 21 towards the rechargeable battery of the headset 1.

In the embodiments shown in the figures 2-4, the microphone(s) 39; 89 and the speaker 38; 88 are incorporated in the stationary part 31; 81. Alternatively, the stationary part 31; 81 may also comprise connector(s) for connecting an external microphone and/or an external speaker.

In the embodiments shown in figures 2-4, the portable part 21 is provided with its own rechargeable battery 24 for powering its transceiver 23. Alternatively, the portable part 21 may also have a fifth electrical interface (not shown), to which the transceiver is connected and which is provided for contacting a battery-out interface of the mobile phone. In such an embodiment, the transceiver of the portable part is powered by the battery of the mobile phone.

The production of the components of the system is well known in the art and will not be described here. By splitting the base 11 into the portable part 21 and the stationary part 31; 81, the stationary part 31; 81 can be constructed universally for different types of mobile phones, while only the portable part 21 is to be adapted to the type of mobile phone.

The handsfree wireless communication system shown in the figures 1-8 is suitably used as follows. The stationary part 31; 81 of the base 11 is mounted in a vehicle and connected to the cigarette lighter socket in the vehicle by means one or more of the accessories of figures 5-8. It is clear that the stationary part 31; 81 may also be used in other environments where an external power source is available, for example on a desk, then using the table-top device (not shown) described above. In any case, the stationary part 31; 81 is provided to remain connected to the external power source. While the user is in his vehicle, the portable part 21 is mounted in the slot 33; 83 of the stationary part 31; 81 and the mobile phone (not shown) is placed in the slot 22 of the portable part 21. Initially, the headset 1 is stored in the socket 35; 85 on the stationary part 31; 81. As long as the system is not in use, recharging current is supplied from the stationary part 31; 81 to the rechargeable batteries of the mobile phone, the portable part 21 and the headset 1. When the user wants to make a handsfree call using the headset 1, or when an incoming call occurs, the user simply takes the headset 1 from the socket 35; 85, places it on one of his ears by means of the ear-clip 5 and directs the microphone 3 towards his mouth. Alternatively, the user can also call handsfree by means of the speaker 38; 88 and microphone(s) 39; 89 on the stationary part 31; 81. In the embodiment of figures 2 and 3, the headset 1 is selected by its removal from the socket 35 and the speaker 38 and microphone(s) 39 are selected when the headset remains stored in the socket 35. In the embodiment of figures 4a-b, the selection is performed manually by the user by means of the manual selection button 96. When the user wants to be able to call handsfree while he is walking, cycling, or anywhere where no external power source is available, the user simply removes and takes along the headset 1 and the portable part 21 of the base 11, with his phone held in the portable part 21.

## Claims

1. Handsfree wireless communication system for handsfree communication between a user and a mobile phone, the system comprising
- a headset (1) for mounting on the user's head, the headset comprising a first transceiver, a first rechargeable battery for providing electrical power to the first transceiver, the first transceiver being electronically connected to a speaker (2) and a microphone (3), the headset further comprising a first electrical interface (6) for enabling recharging of the first rechargeable battery,
- a base (11) comprising means for holding the mobile phone (22), the base comprising a second transceiver (23) which is electronically connected to a phone interface (25) and means (24) for providing electrical power to the second transceiver, the second transceiver being provided for wirelessly communicating with the first transceiver, the phone interface being provided for contacting an external interface of the mobile phone and enabling communication between the mobile phone and the second transceiver (23), the base further comprising a power interface (32; 82) for connecting the base (11) to an external source of electrical power,
**characterised in that**
- the base (11) further comprises means (35; 85) for storing the headset (1) and a second electrical interface (36; 86) for contacting the first electrical interface (6) and providing recharging current to the first rechargable battery of the headset,
- the base is a combination of a stationary part (31; 81) and a portable part (21) which is removably mountable on the stationary part,
- the portable part (21) comprising the means (22) for holding the mobile phone, the phone interface (25), the second transceiver (23) and the means (24) for providing electrical power to the second transceiver (23),
- the portable part (21) further comprising a third electrical interface (26) for contacting a fourth electrical interface (34; 84) on the stationary part (31; 81), the third electrical interface (26) being connected to the phone interface (25) for conducting recharging current to a second rechargable battery which is included in the mobile phone,
- the stationary part (31; 81) comprising the power interface (32; 82) and recharging means for providing recharging current to the second and fourth electrical interfaces (36; 86, 34; 84).

2. Handsfree wireless communication system according to claim 1, **characterised in that** the means for providing electrical power to the second transceiver (23) comprise a third rechargeable battery (24), which is mounted on the portable part (21) of the base (11) and connected to the third electrical interface (26) for enabling recharging of the third rechargeable battery.

3. Handsfree wireless communication system according to claim 1, **characterised in that** the means for providing electrical power to the second transceiver (23) comprise a fifth electrical interface which is connected to the second transceiver (23) and is provided for contacting a battery-out interface of the mobile phone.

4. Handsfree wireless communication system according to any one of the claims 1-3, **characterised in that** the means (35; 85) for storing the headset (1) and the second electrical interface (36; 86) are mounted on the stationary part (31; 81) of the base (11).

5. Handsfree wireless communication system according to any one of the claims 1-3, **characterised in that** the means (35; 85) for storing the headset (1) and the second electrical interface (36; 86) are mounted on the portable part (21) of the base (11), the second electrical interface being connected to the third electrical interface (26).

6. Handsfree wireless communication system according to any one of the previous claims, **characterised in that** the stationary part (31; 81) of the base comprises means for producing sound (38; 88), means for receiving sound (39; 89), and means (96) for selecting between communication via the sound receiving and producing means (39; 89, 38; 88) on the stationary part (31; 81) of the base (11) and communication via the speaker (2) and microphone (3) on the headset (1).

7. Handsfree wireless communication system according to claim 6, **characterised in that** the selecting means are operated by detecting means for detecting storage of the headset (1) on the base (11).

8. Handsfree wireless communication system according to any one of the previous claims, **characterised in that** the system further comprises a cigarette lighter adapter (41; 61) which is insertable in a cigarette lighter socket of a vehicle and is removably connectable to the power interface (32; 82) on the stationary part (31; 81) of the base (11).

9. Handsfree wireless communication system according to claim 8, **characterised in that** the stationary part (31; 81) further comprises a dc jack (37; 87), the system further comprising a power cable (51) for connecting the cigarette lighter adapter (41; 61) to the dc jack (37; 87) of the stationary part (31; 81) of the base (11), the power interface (32; 82) of the stationary part (31; 81) being adapted to attach the stationary part to a base plate mounted on a dashboard of the vehicle.

10. Handsfree wireless communication system according to claim 8 or 9, **characterised in that** the system further comprises a table-top device comprising an ac/dc converter, an ac mains plug for connection to an ac mains net and a socket corresponding to a cigarette lighter socket in a vehicle.

11. Handsfree wireless communication system according to any one of the previous claims, **characterised in that** the portable part (21) of the base (11) is provided with means (28) for attaching the portable part in the vicinity of the user.
